# EUROPEAN PATENT APPLICATION

(11) **EP 0 732 648 A2**
(43) Date of publication of application: **18.09.1996**
(21) Application number: 96301621.7
(22) Date of filing: 08.03.1996
(51) Int. Cl.: G06F 3/12

(54) **Method for printing a screen image**

(30) Priority: 14.03.1995 US 403600
(71) Applicant: NCR INTERNATIONAL INC., Dayton, Ohio 45479 (US)
(72) Inventor: Bowers, Walter L., Jr., Decatur, Georgia 30033 (US); Newton, Kenneth E., Norcross, Georgia 30092 (US)
(74) Representative: Robinson, Robert George

(57) **Abstract**

A method for printing a screen image for the Unix operating system which is simple to perform by a user is based upon known techniques for establishing a pseudo terminal. Under the method of the present invention, a master process (56) and a client process (52) controlled by the master process (56) are established within the processor (12). The master process (56) determines whether the stroke is from a print screen key (38) or some other key. If the stroke is from the print screen key (38), the master process (56) reads the screen image from a screen buffer (44), and converts the screen image to a printable graphic. A printer (42) prints the printable graphic.

## Description

The present invention relates to print screen functions or utility programs for or within computer operating systems.

Microsoft's Disk Operating System (DOS) provides a print screen function which allows a user to print the ASCII text displayed by a monitor. Microsoft provides an additional utility (graphics.com) for printing binary graphic screen images. The print screen function is implemented by striking the print screen key (Prt Sc) on a keyboard.

The Unix operating system, including all of its different versions, does not provide a print screen function or utility program.

It is an object of the present invention to provide a method for printing a screen for the Unix operating system.

Therefore, according to one aspect of the present invention, there is provided a method for printing a screen image by a computer, characterized by the steps of: executing a Unix operating system by a processor within the computer; recording a stroke of a print screen key on a keyboard by the processor; and printing the screen image by a printer.

According to another aspect of the present invention, there is provided a method for printing a screen image by a computer, characterized by the steps of: executing a Unix operating system by a processor within the computer; establishing a master process and a client process controlled by the master process within the processor; recording a stroke on a keyboard by the master process; determining whether the stroke is from a print screen key by the master process; and if the stroke is from the print screen key, reading the screen image from a screen buffer by the master process, converting the screen image to a printable graphic by the master process, and printing the screen image by a printer.

The method of the present invention is based upon known techniques for establishing a pseudo terminal. Under the method of the described embodiment, a master process and a client process controlled by the master process are established within the processor. The master process determines whether the stroke is from a print screen key or some other key. If the stroke is from the print screen key, the master process reads the screen image from a screen buffer, and converts the screen image to a printable graphic. A printer prints the printable graphic.

One embodiment of the present invention will now be described by way of example, with reference to the accompanying drawings, in which:-
Fig. 1 is a block diagram of a computer system employing the method of the present invention; and
Fig. 2 is flow diagram illustrating the method of the present invention.

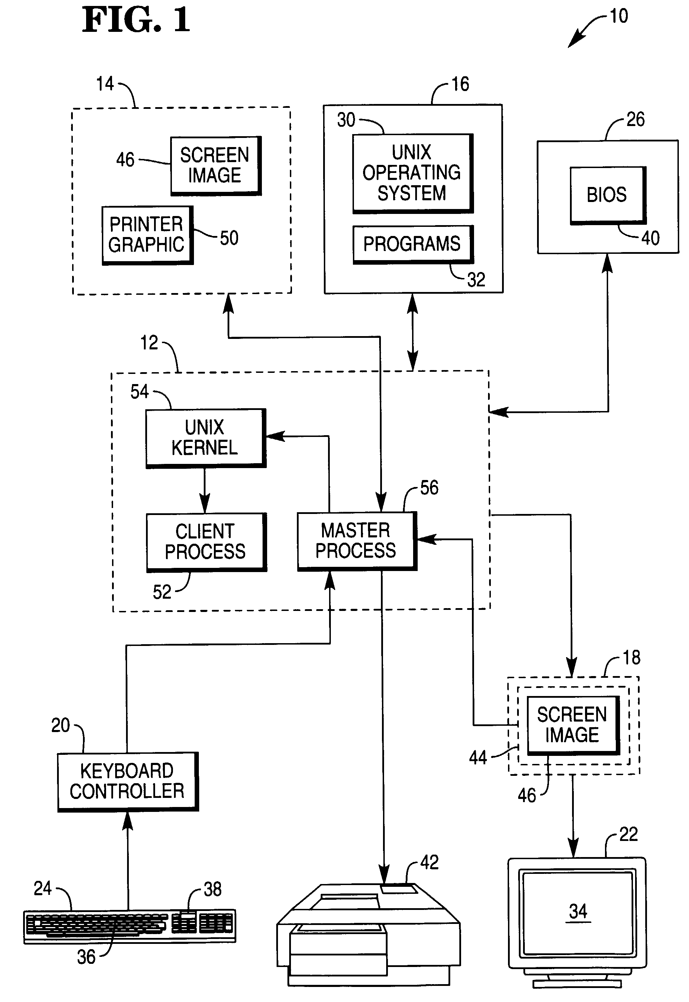

Referring now to Fig. 1, computer system 10 primarily includes processor 12, memory 14, storage medium 16, video controller 18, keyboard controller 20, monitor 22, keyboard 24, ROM 26, and printer 42.

Processor 12 is the heart of system 10 and is responsible for executing Unix operating system 30 and program 32 that is compiled to run on top of Unix operating system 30.

Processor 12 responds to Print Screen key input signals from keyboard controller 20 and performs functions necessary to cause printer 42 to print the image displayed by screen 34 of monitor 22.

Memory 14 stores data and code used by processor 12. In accordance with the present invention, memory 14 stores screen image 46, which is used by processor 12 to produce printer graphic 50. Processor 12 stores printer graphic 50 in memory 14.

Storage medium 16 provides non-volatile storage of operating system 30 and programs 32. Processor 12 loads operating system 30 from storage medium 16 when system 10 is started, and loads programs 32 in response to user-generated commands.

Video controller 18 interprets signals from processor 12 and illuminates screen 34 of monitor 22. Video controller 18 includes screen buffer 44 which contains screen image 46.

Keyboard controller 20 scans circuits within keyboard 24.

Keyboard 24 includes keys 36 for generating key stroke commands to processor 12. One of keys 36 is a Print Screen key 38.

ROM 26 stores BIOS instructions 40 for starting system 10, for reading from and writing to storage medium 16, for operating keyboard 24, and for sending characters to printer 42.

Printer 42 prints documents in response to print commands from processor 12. In the present application, printer 42 receives and prints printer graphic 50 from memory 14.

Operating system 30 may be the original or later versions of the Unix operating system developed by Unix Systems Laboratories, or any version developed by other companies, such as the version of the Unix operating system developed by NCR Corporation (formerly known as AT&T Global Information Solutions).

Operating system 30 includes client process 52, kernel 54, and master process 56.

Kernel 54 provides a pseudo terminal that emulates a physical terminal in a manner known in the art.

Master process 56 handles the actual input and output to the pseudo terminal of kernel 54, starts client process 52, and provides the print screen function. Master process 56 is designed to be invoked like a shell. Most parameters are passed via shell environment variables.

Client process 52 runs as a slave process of master process 56 and handles all keyboard inputs that are not print screen inputs.

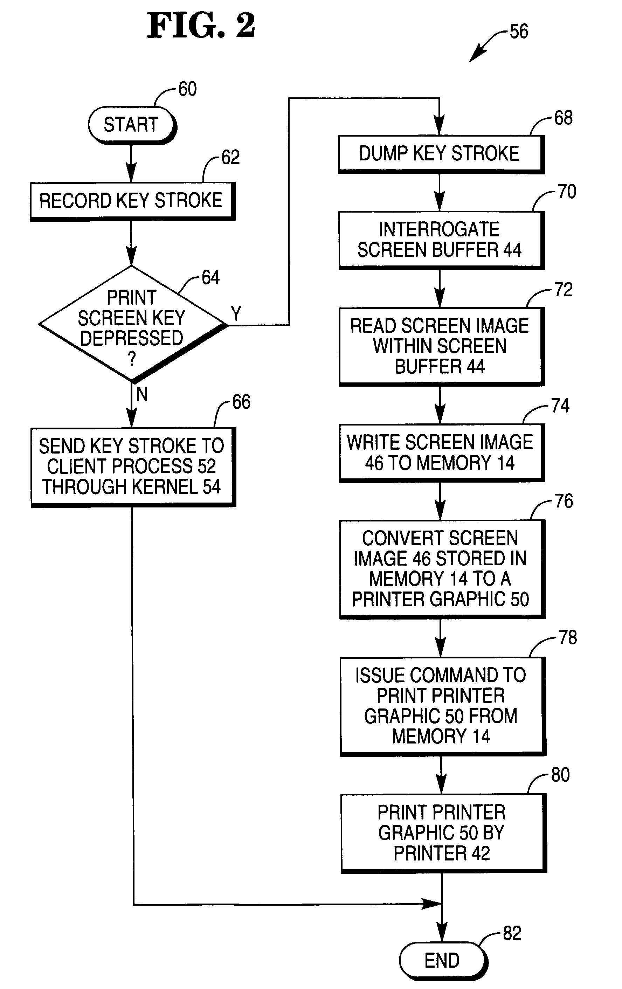

Turning now to Fig. 2, the method of the present invention begins with START 60.

In step 62, master process 56 records a key stroke from keyboard 24.

In step 64, master process 56 determines whether Print Screen key 38 has been depressed. If not, the method continues in step 66, in which master process 56 sends the key stroke to client process 52 through kernel 54. The method ends at END 82.

Returning to step 64, if Print Screen key 36 has been depressed, master process 56 dumps the key stroke in step 68.

In step 70, master process 56 interrogates screen buffer 44.

In step 72, master process 56 reads screen image 46 within screen buffer 44 and strips away control characters.

In step 74, master process 56 writes screen image 46 to a file in memory 14.

In step 76, master process 56 converts screen image 46 to printer graphic 50.

In step 78, master process 56 issues a command to print printer graphic 50 and remove screen image 46 and printer graphic 50 from memory 14.

In step 80, printer 42 prints printer graphic 50 and the method ends at END 82.

Thus, there has been described a method for printing a screen image for the Unix operating system as simply as under the Microsoft Disk Operating System (MS-DOS).

## Claims

1. A method for printing a screen image by a computer, characterized by the steps of: executing a Unix operating system by a processor (12) within the computer; recording a stroke of a print screen key (38) on a keyboard by the processor (12); and printing the screen image by a printer (42).

2. A method according to claim 1, characterized by the steps of: reading the screen image from a screen buffer (44) by the processor after said recording step; and converting the screen image to a printable graphic by the processor (12).

3. A method according to claim 2, characterized by the steps of: storing the screen image in a memory (14) by the processor (12) after said reading step and storing the printable graphic in the memory (14) by the processor (12) after said converting step.

4. A method according to claim 3, characterized in that said reading step includes the substeps of: generating a command to print the printable graphic by the processor (12); and sending the command to the printer (42).

5. A method for printing a screen image by a computer, characterized by the steps of: executing a Unix operating system by a processor (12) within the computer; establishing a master process (56) and a client process (52) controlled by the master process (56) within the processor (12); recording a stroke on a keyboard (24) by the master process (56); determining whether the stroke is from a print screen key (38) by the master process (56); and if the stroke is from the print screen key (38), reading the screen image from a screen buffer (44) by the master process (56), converting the screen image to a printable graphic by the master process (56), and printing the screen image by a printer (42).

6. A method according to claim 5, characterized by the step of: if the stroke is from a key other than the print screen key (38), transferring the key stroke to the client process (52) by the master process (56).
